(19) Europäisches Patentamt

European Patent Office

Office européen des brevets

(11) Publication number: **0 405 797 A1**

# EUROPEAN PATENT APPLICATION

(21) Application number: 90306506.8

(22) Date of filing: 14.06.90

(51) Int. Cl.⁵: **C01B 15/10, C11D 3/39**

(30) Priority: 27.06.89 JP 162647/89

(43) Date of publication of application:
02.01.91 Bulletin 91/01

(84) Designated Contracting States:
AT BE CH DE DK ES FR GB GR IT LI LU NL SE

(71) Applicant: TOKAI DENKA KOGYO KABUSHIKI KAISHA
6-1, 1-chome Ohtemachi, Chiyoda-ku
Tokyo(JP)

(72) Inventor: Sato, Kanji
580 Fujioka
Fuji-shi, Shizuoka-ken(JP)
Inventor: Kondo, Tomomasa
580 Fujioka
Fuji-shi, Shizuoka-ken(JP)

(74) Representative: Cropp, John Anthony David et al
MATHYS & SQUIRE 10 Fleet Streeteet
London, EC4Y 1AY(GB)

(54) Sodium percarbonate composition of high safety.

(57) A sodium percarbonate composition of high safety is obtained by incorporating
(A) at least one compound selected from the group consisting of boric acid, inorganic magnesium compounds and inorganic aluminum compounds; and
(B) at least one compound selected from the group consisting of alkali metal carbonates, alkali metal bicarbonates, alkali metal sulfates and sodium borate into sodium percarbonate.

EP 0 405 797 A1

# SODIUM PERCARBONATE COMPOSITION OF HIGH SAFETY

## Background of the Invention

The present invention relates to a sodium percarbonate composition of high safety and more particularly to a sodium percarbonate composition of high safety having a high pure substance content suitable for use as a fiber bleaching agent, a detergent, a slime removing agent, an oxygen generating agent or a sterilizer, alone or as a mixture with other ingredients.

Sodium percarbonate is an oxidative substance, and when mixed with a combustible substance it may easily ignite and burn, Further, when a mixture thereof with a combustible substance is ignited, there is a danger of vigorous burning due to the combustion promoting action of oxygen generated by the decomposition of sodium percarbonate.

Incorporating an incombustible diluent in such mixture of sodium percarbonate and a combustible to lower the concentration of effective oxygen may be one method for reducing the danger of combustion. In this method, however, it is necessary to use a large amount of such diluent, with the result that not only is the concentration of active oxygen lowered but also the effect of sodium percarbonate is deteriorated markedly. For solving this problem, there is proposed a method using sodium chloride or sodium sulfate in Japanese Patent Laid-Open No. 11210/1985. According to this proposed method, however, the danger suppressing effect is very poor, and it is necessary to use a large amount of sodium chloride or sulfate, thus causing decrease of the amount of active oxygen, so this method is not practically applicable.

It is the object of the present invention to overcome the above-mentioned drawbacks of the prior art.

## Summary of the invention

The present inventors found that the aforementioned problems so far unsolved by the prior art could be solved by incorporating in sodium percarbonate a mixture of the following components (A) and (B) as a danger suppressing agent:

(A) at least one compound selected from the group consisting of boric acid, inorganic magnesium compounds and inorganic aluminum compounds: and

(B) at least one compound selected from the group consisting of alkali metal carbonates, alkali metal bicarbonates, alkali metal sulfates and sodium borate.

Thus, the present invention resides in a sodium percarbonate composition containing the above compounds (A) and (B).

Preferably, in the composition of the present invention, the proportions of the compounds (A) and (B) are each in the range of 2 to 30 wt% and the total amount of both compounds is not more than 35 wt%.

## Detailed Description of the Invention

In the present invention, as examples of inorganic magnesium compounds in group (A) there are mentioned magnesium hydroxide, basic magnesium carbonate (anhydrous, trihydrate), magnesium sulfate (anhydrous, tri-, penta- and heptahydrate), magnesium chloride (anhydrous, hexahydrate), magnesium silicate (anhydrous, pentahydrate), magnesium phosphate (anhydrous, trihydrate), trimagnesium phosphate (anhydrous, octahydrate), magnesium sulfamate (anhydrous), magnesium borate (anhydrous), magnesium bromide (anhydrous, hexahydrate), magnesium pyrophosphate (anhydrous, trihydrate), and magnesium imidobis sulfate (anhydrous). As examples of inorganic aluminum compounds in the same group there are mentioned aluminum hydroxide, aluminum sulfate (anhydrous, octadecahydrate), aluminum silicate (anhydrous, mono- to pentahydrate), aluminum oxide (anhydrous, mono- and trihydrate), sodium aluminate (anhydrous), aluminum chloride (anhydrous, hexahydrate), potash alum (anhydrous, tetracosahydrate), and alumina white.

In group (B), as examples of alkali metal carbonates there are mentioned sodium carbonate and potassium carbonate; as examples of alkali metal bicarbonates there are mentioned sodium bicarbonate and potassium bicarbonate; and as examples of alkali metal sulfates there are mentioned sodium sulfate and potassium sulfate.

In the danger suppressing agent used in the present invention, if the compounds (A) and (B) are used each alone, there will not be obtained a satisfactory effect in practical use although a mere diluting effect will be exhibited Only when both compounds (A) and (B) are used together, is a satisfactory effect obtained.

It is preferable that the proportions of the compounds (A) and (B) used in the present invention be each in the range of 2 to 30 wt%. If each proportion is less than 2 wt%, there will not be obtained a satisfactory effect, while it it is more than 30 wt%, the concentration of effective oxygen will be reduced more than necessary although there will be obtained a satisfactory effect. Thus, both such proportions are not preferred. It is more preferable that the compounds (A) and (B) be used each in an amount of 5 to 15 wt%.

Usually, a bleaching agent containing sodium percarbonate is required to contain not less than 10% of active oxygen. Therefore, it is desirable that the amount of the danger suppressing agent used in the invention be not more than 35 wt% as the total amount of the compounds (A) and (B).

Other danger suppressing agents may also be incorporated in the composition of the present invention. Examples are urea, urea derivatives, acetates, amino acids having not more than 7 carbon atoms or salts thereof, triazines and guanidines. Further, a stabilizer, a granulation binder and a coating agent, which are commonly used for sodium percarbonate, may also be incorporated in the composition.

There may be adopted any method for preparing the composition of the present invention provided the ingredients can be intimately mixed thereby. For example, the composition of the present invention can be prepared by mixing the compounds (A) and (B) with wet crystals of sodium percarbonate obtained in a crystallizing step, followed by granulation; or by merely mixing them with dry sodium percarbonate crystals or with dry granules of sodium percarbonate obtained by granulation. In the case of using hydrate, it is more preferable that the hydrate be merely mixed with dried sodium percarbonate.

Sodium percarbonate is generally in a powdered form. Various testing methods have been proposed to check danger, but the most common testing method for a powdered oxidizing agent is the method defined by the Fire Defense Law (e.g. Law No.55 issued May 24, 1988; Government Ordinance No.358 issued December 27, 1988; Ordinance No.1 of the Ministry of Home Affairs).

The present inventors have conducted a burning test to check a latent danger of oxidative power and a ball drop type shock sensitivity test to check danger, both in accordance with the testing method for dangerous objects Class 1, powdered substances, defined in the Fire Defense Law.

In the burning test, two mixtures, are prepared one of which consists of an oxidizing agent and powdered wood at a ratio of 1:1 and the other at a ratio of 8:2 and the burning rate of these mixtures is determined. As a standard substance, a mixture of potassium perchlorate and powdered wood at a ratio of 1:1 is also determined for burning rate in the same manner. When the burning rate of the oxidizing agent thus determined is lower than that of the standard substance, it is judged that the latent danger of oxidative power is small.

In the ball drop type shock sensitivity test, a steel ball is dropped on to a mixture of 2mg each of an oxidizing agent and red phosphorus from a height corresponding to a 50% explosion point of the standard substance, and the degree of explosion is determined. Potassium nitrate is used as the standard substance. When the degree of explosion is lower than that of the standard substance, it is judged that the danger against shock is small. Thus, an overall judgement of danger can be made by these methods.

Examples

Examples and Comparative Examples will be described below to illustrate the present invention more concretely. But it is to be understood that the invention is not limited thereto. In all of these examples, the percents mean percents by weight, and the burning rate in the burning test indicates an average value obtained from measurements conducted five times. The "explosion freq. test freq. in ball drop type shock sensitivity test" indicates the number of explosions when a steel ball was dropped from a 50% explosion point of potassium nitrate as the standard substance relative to the number of tests.

Comparative Examples 1-13

The compositions shown in Table 2 were prepared by mixing dry powders of the ingredients described in the same table, using a V-type mixture machine. The standard substances shown in Table 1 and the compositions shown in Table 2 were subjected to the burning test and the ball drop type shock sensitivity test according to the testing method for dangerous objects Class 1, powdered substances, defined by the Fire Defense Law. The results are as set forth in Table 1 and 2. The powdered wood used in the combustion test is not from the peripheral portion of a Japanese cedar but from the whole thereof.

3

Table 1

| Comp. Ex. No. | Standard Substance | Burning Rate (sec) sample-wooden power mixing ratio 1:1 | 50% Explosion Point Energy in ball drop type shock sensitivity test |
|---|---|---|---|
| 1 | potassium perchlorate | 300 | - |
| 2 | potassium nitrate | - | 0.35(J) |

Table 2

| Comp. Ex. No. | Composition (%) | | | Effective Oxygen | Burning Rate (sec) | | Explosion freq./test freq. in ball drop type shock sensitivity test |
| | Sodium Percarbonate (purity 97%) | Other Ingredients | | | Sample-wooded powder mixing ratio | | |
| | | | | (%) | 1:1 | 8:2 | |
|---|---|---|---|---|---|---|---|
| 3 | 100 | - | | 14.8 | 35 | 35 | 17/40 |
| 4 | 60 | sodium carbonate | 40 | 8.9 | did not burn | 45 | 7/40 |
| 5 | 50 | " | 50 | 7.4 | " | did not burn | 3/40 |
| 6 | 60 | sodium bicarbonate | 40 | 8.9 | " | 43 | 5/40 |
| 7 | 50 | " | 50 | 7.4 | " | did not burn | 0/40 |
| 8 | 60 | sodium sulfate | 40 | 8.9 | " | 48 | 3/40 |
| 9 | 60 | anhydrous sodium borate | 40 | 8.9 | " | 50 | 3/40 |
| 10 | 60 | sodium chloride | 40 | 8.9 | " | 45 | 4/40 |
| 11 | 65 | sodium sulfate / sodium carbonate | 25 / 10 | 9.6 | 40 | 43 | 7/40 |
| 12 | 65 | sodium chloride / sodium carbonate | 25 / 10 | 9.6 | did not burn | 45 | 5/40 |
| 13 | 60 | magnesium sulfate (anhydrous) | 40 | 8.9 | " | 47 | 7/40 |

EP 0 405 797 A1

Examples 1 - 16

The compositions shown in Table 3 below were prepared in the same way as in Comparative Examples 3-13 and then subjected to the burning test and the ball drop type shock sensitivity test also in the same manner as in those comparative examples. The results of the burning test are as set out in Table 3. In all of the working Examples, the explosion freq./test freq. when a steel ball was dropped from a 50% explosion point of potassium nitrate in the ball drop type shock sensitivity test was not more than 10 for 40 times of the test.

Table 3

| Ex. No. | Sodium Percarbonate (purity 97.0%) | Danger Suppressing Agent (A) | | Danger Suppressing Agent (B) | | Effective Oxygen (%) | Burning Rate (sec) Sample-wooden powder mixing ratio 1:1 | Burning Rate (sec) Sample-wooden powder mixing ratio 8:2 |
|---|---|---|---|---|---|---|---|---|
| 1 | 85 | boric acid | 10 | sodium carbonate | 5 | 13.0 | did not burn | did not burn |
| 2 | 85 | magnesium hydroxide | 10 | " | 5 | 13.0 | " | " |
| 3 | 78 | " | 7 | " | 15 | 11.9 | " | " |
| 4 | 72 | " | 3 | " | 25 | 11.0 | " | " |
| 5 | 83 | magnesium sulfate heptahydrate | 7 | " | 10 | 12.7 | " | " |
| 6 | 83 | " | 7 | sodium bicarbonate | 10 | 12.7 | " | " |
| 7 | 83 | " | 7 | sodium sulfate | 10 | 12.7 | " | " |
| 8 | 83 | " | 7 | borax | 10 | 12.7 | " | " |
| 9 | 85 | magnesium salfate trihydrate | 10 | sodium carbonate | 5 | 13.0 | " | " |
| 10 | 85 | dimagnesium phosphate trihydrate | 10 | " | 5 | 13.0 | " | " |
| 11 | 85 | magnesium chloride hexahydrate | 10 | " | 5 | | " | " |
| 12 | 85 | magnesium silicate pentahydrate | 10 | " | 5 | 13.0 | " | " |
| 13 | 85 | magnesium sulfate (anhydrous) | 10 | borax | 5 | 13.0 | " | " |
| 14 | 85 | aluminum hydroxide | 10 | " | 5 | 13.0 | " | " |
| 15 | 85 | aluminum sulfate octadecahydrate | 10 | " | 5 | 13.0 | " | " |
| 16 | 85 | aluminum chloride hexahydrate / magnesium sulfate heptahydrate | 5 / 5 | " | 5 | 13.0 | " | " |

EP 0 405 797 A1

Examples 17 - 25

Sodium carbonate and hydrogen peroxide were reacted together in an aqueous solution and the resulting crystals were separated by centrifugal filtration. The crystals of sodium percarbonate in a wet state thus obtained were mixed with each of the ingredients shown in Table 4 below to give the compositions described in the same table. The resulting mixtures were granulated by extrusion using a granulator equipped with a wire gauze of 1.0 mm dia. meshes. The granules thus obtained were dried and then subjected to the burning test and the ball drop type shock sensitivity test in the same manner as in Comparative Examples 3-13. The results of the burning test are as shown in Table 4. In all of Examples 25-35, the explosion freq./test freq. in the ball drop type shock sensitivity test was not more than 10 for 40 times of the time.

Table 4

| Ex. No. | Sodium Percarbonate (purity %) | Composition (%) | | | | | | Burning Rate (sec) | |
|---------|--------------------------------|-----------------|---|---------------------------|---|--------------------|---|--------------------|----|
| | | Danger Suppressing Agent | | Danger Suppressing Agent | | Effective Oxygen | | Sample-wooden powder mixing ratio | |
| | | (A) | | (B) | | (%) | | 1:1 | 8:2 |
| 17 | 80 (96.5) | boric acid | 10 | sodium carbonate | 10 | 11.8 | | did not burn | did not burn |
| 18 | 80 (96.8) | " | 10 | sodium bicarbonate | 10 | 11.8 | | " | " |
| 19 | 80 (97.0) | magnesium hydroxide | 10 | sodium sulfate | 10 | 11.9 | | " | " |
| 20 | 80 (96.5) | " | 10 | sodium borate (anhydrous) | 10 | 11.8 | | " | " |
| 21 | 85 (97.0) | basic magnesium carbonate (anhydrous) | 10 | " | 5 | 12.6 | | " | " |
| 22 | 85 (96.3) | aluminum hydroxide | 10 | " | 5 | 12.5 | | " | " |
| 23 | 85 (96.5) | aluminum silicate | 10 | " | 5 | 12.5 | | " | " |
| 24 | 85 (96.7) | aluminum oxide (anhydrous) | 10 | " | 5 | 12.6 | | " | " |
| 25 | 80 (96.5) | alumina white | 5 | sodium carbonate | 10 | 11.8 | | " | " |
| | | boric acid | 5 | | | | | | |

**Claims**

1. A sodium percarbonate composition of high safety, comprising sodium percarbonate and the following components (A) and (B) incorporated therein:

(A) at least one compound selected from the group consisting of boric acid, inorganic magnesium compounds and inorganic aluminum compounds; and

(B) at least one compound selected from the group consisting of alkali metal carbonates, alkali metal bicarbonates, alkali metal sulfates and sodium borate.

2. A sodium percarbonate composition of Claim 1 wherein the amounts of the compounds (A) and (B) are each in the range of 2 to 30 % by weight of the composition, and the total amount of the compounds (A) and (B) is not more than 35% weight of the composition.

3. A sodium percarbonate composition of Claim 1 or claim 2 wherein said inorganic magnesium compound is magnesium hydroxide, basic magnesium carbonate, magnesium sulfate, magnesium chloride, magnesium silicate, magnesium phosphate, trimagnesium phosphate, magnesium sulfamate, magnesium borate, magnesium bromide, magnesium pyrophosphate or magnesium imidobis sulfate.

4. A sodium percarbonate composition of any one of Claims 1 to 3 wherein said inorganic aluminum compound is aluminum hydroxide, aluminum sulfate, aluminum silicate, aluminum oxide, sodium aluminate, aluminum chloride, potash alum or aluminate white.

5. A sodium percarbonate composition of any one of Claims 1 to 4 wherein said alkali metal is sodium or potassium.

## DOCUMENTS CONSIDERED TO BE RELEVANT

| Category | Citation of document with indication. where appropriate, of relevant passages | Relevant to claim | CLASSIFICATION OF THE APPLICATION (Int. Cl.5) |
|---|---|---|---|
| X | FR-A-2528447 (KAO CO.) <br> * claims 1, 3, 4 * <br> * page 11, lines 13 - 21 * <br> * page 21, line 12 - page 22, line 1 * <br> * page 22, lines 12 - 18 * | 1, 4, 5 | C01B15/10 <br> C11D3/39 |
| X | CHEMICAL ABSTRACTS, vol. 104, no. 4, 27 January 1986 <br> Columbus, Ohio, USA <br> page 110; right-hand column; ref. no. 21425Y <br> & JP-A-60118606 (Mitsubishi Gas Chemical Co ) 26.06.1985 <br> * abstract * | 1, 5 | |
| A | CHEMICAL ABSTRACTS, vol. 99, no. 8, 22 August 1983 <br> Columbus, Ohio, USA <br> page 112; left-hand column; ref. no. 55833Y <br> & JP-A-5874506 (Mitsubishi Gas Chemical Co ) 06.05.1983 <br> * abstract * | | |
| A | CHEMICAL ABSTRACTS, vol. 100, no. 12, 19 March 1984 <br> Columbus, Ohio, USA <br> page 139; left-hand column; ref. no. 88157Y <br> & JP-A-58204806 (Nippon Peroxide) 29.11.1983 <br> * abstract * | | TECHNICAL FIELDS SEARCHED (Int. Cl.5) <br><br> C01B <br> C11D |

The present search report has been drawn up for all claims

| Place of search | Date of completion of the search | Examiner |
|---|---|---|
| THE HAGUE | 26 JULY 1990 | VAN BELLINGEN I. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)